# EUROPEAN PATENT APPLICATION

(11) **EP 4 546 833 A1**
(43) Date of publication of application: **30.04.2025**
(21) Application number: 23834742.1
(22) Date of filing: 30.06.2023
(51) Int. Cl.: H04W 8/02, H04W 24/08

(54) **CALL CAPABILITY MONITORING METHOD AND APPARATUS, AND TERMINAL AND READABLE STORAGE MEDIUM**

(30) Priority: 07.07.2022 CN 202210803425
(71) Applicant: Vivo Mobile Communication Co., Ltd., Dongguan, Guangdong 523863 (CN)
(72) Inventor: ZHU, Yuejun, Dongguan, Guangdong 523863 (CN)
(74) Representative: Murgitroyd & Company
(86) International application number: PCT/CN2023/104411
(87) International publication number: WO 2024/007975

(57) **Abstract**

This application discloses a call capability monitoring method and apparatus, a terminal, and a readable storage medium, and belongs to the field of communication technologies. The method includes: in a case that a terminal supports a VoNR call and completes registration on an SA NR network, the terminal counts numbers of times that the terminal successfully performs a VoNR call and a VoLTE call, respectively; and in a case that a target number of times is greater than or equal to a preset number of times, the terminal stops counting a number of times of successful calls, and determines a VoNR capability of the NR network within a first time period based on the target number of times, where if the target number of times is a number of times that the terminal successfully performs the VoNR call, the NR network supports the VoNR capability within the first time period; or if the target number of times is a number of times of that the terminal successfully performs the VoLTE, the NR network does not support the VoNR capability within the first time period.

## Description

### CROSS-REFERENCE TO RELATED APPLICATION

This application claims priority to Chinese Patent Application No. 202210803425.0, filed in China on July 7, 2022, which is incorporated herein by reference in its entirety.

### TECHNICAL FIELD

This application relates to the field of communication technologies, and specifically, to a call capability monitoring method and apparatus, a terminal, and a readable storage medium.

### BACKGROUND

With development of communication technologies, functions of electronic devices become increasingly rich. For example, the electronic devices may have a voice over new radio (Voice over New Radio, VoNR) capability.

In a current network coverage situation, the VoNR capability and an evolved packet system-fall back (Evolved Packet System-Fall Back, EPS-FB) voice capability co-exist on a network side for a long term.

However, because a network side device only indicates, in a registration response message, that the network side device supports a voice capability of an Internet Protocol multimedia subsystem (IP (Internet protocol, IP) Multimedia Subsystem, IMS), but does not indicate which voice capabilities the network side device specifically supports in the IMS voice, a terminal cannot learn whether a network (for example, an NR network) to which the terminal accesses supports the VoNR capability. As a result, a terminal supporting the VoNR cannot optimize experience in a scenario of a voice service.

### SUMMARY

An objective of embodiments of this application is to provide a call capability monitoring method and apparatus, a terminal, and a readable storage medium, to resolve a problem that a terminal cannot optimize experience in a scenario of a voice service because the terminal cannot learn whether a network to which the terminal accesses supports a VoNR capability.

According to a first aspect, an embodiment of this application provides a call capability monitoring method. The method includes: in a case that a terminal supports a voice over new radio VoNR call and completes registration on a standalone (Stand Alone, SA) NR network, the terminal counts numbers of times that the terminal successfully performs a VoNR call and a voice over long-term evolution (Voice over Long-Term Evolution, VoLTE) call, respectively; in a case that a target number of times is greater than or equal to a preset number of times, the terminal stops counting a number of times of successful calls, and determines a VoNR capability of the NR network within a first time period based on the target number of times, where if the target number of times is a number of times that the terminal successfully performs the VoNR call, the NR network supports the VoNR capability within the first time period; or if the target number of times is a number of times of that the terminal successfully performs the VoLTE, the NR network does not support the VoNR capability within the first time period.

According to a second aspect, an embodiment of this application provides a call capability monitoring apparatus. The call capability monitoring apparatus includes: a counting module and a determining module. The counting module is configured to count, in a case that a terminal supports a VoNR capability and completes registration on a standalone SA NR network, numbers of times that the terminal successfully performs a VoNR call and a VoLTE call, respectively; and the counting module is further configured to stop counting a number of times of successful calls in a case that a target number of times is greater than or equal to a preset number of times; and the determining module is configured to determine, after the counting module stops counting the number of times of successful calls, the VoNR capability of the NR network within a first time period based on the target number of times, where if the target number of times is a number of times that the terminal successfully performs the VoNR call, the NR network supports the VoNR capability within the first time period; or if the target number of times is a number of times that the terminal successfully performs the VoLTE, the NR network does not support the VoNR capability within the first time period.

According to a third aspect, an embodiment of this application provides an electronic device, including a processor, a memory, and a program or instructions stored in the memory and executable on the processor, where the program or the instructions, when executed by the processor, implement the steps of the method according to the first aspect.

According to a fourth aspect, an embodiment of this application provides a readable storage medium, storing a program or instructions, where the program or instructions, when executed by a processor, the steps of the method according to the first aspect are implemented.

According to a fifth aspect, an embodiment of this application provides a chip, including a processor and a communication interface, where the communication interface is coupled to the processor, and the processor is configured to execute a program or instructions, to implement the method according to the first aspect.

In the embodiments of this application, after completing registration on an SA NR network, a terminal supporting a VoNR may count numbers of times that the terminal successfully performs a VoNR call and a voice over long-term evolution VoLTE call, and determine a VoNR capability of the terminal in a future time period (for example, a first time period) based on the numbers of times. Therefore, the terminal can accurately learn a VoNR capability of a network to which the terminal accesses, so that the terminal can optimize experience in a scenario of a voice service based on the VoNR capability of the accessed NR network, thereby improving user experience.

### BRIEF DESCRIPTION OF THE DRAWINGS

FIG. 1 is a block diagram 1 of a wireless communication system to which an embodiment of this application is applicable;
FIG. 2 is a block diagram 2 of a wireless communication system to which an embodiment of this application is applicable;
FIG. 3 is a block diagram 3 of a wireless communication system to which an embodiment of this application is applicable;
FIG. 4 is a schematic flowchart of a call capability monitoring method according to an embodiment of this application;
FIG. 5 is a schematic flowchart of a VoNR calling procedure;
FIG. 6 is a schematic flowchart of a VoNR called procedure;
FIG. 7 is a schematic flowchart of an EPS FB calling procedure;
FIG. 8 is a schematic flowchart of an EPS FB called procedure;
FIG. 9 is a schematic structural diagram of a call capability monitoring apparatus according to an embodiment of this application;
FIG. 10 is a schematic structural diagram 1 of a terminal according to embodiments of this application; and
FIG. 11 is a schematic structural diagram 2 of a terminal according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" represents at least one of the connected objects, and the character "/" generally represents an "or" relationship between the associated objects.

It should be noted that, the technologies described in the embodiments of this application are not limited to a long term evolution (Long Term Evolution, LTE)/an LTE-Advanced (LTE-Advanced, LTE-A) system, and may further be applicable to other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-FDMA), and other systems. The terms "system" and "network" may usually be used interchangeably in the embodiments of this application. The described technology is applicable to the systems and radio technologies mentioned above, and is also applicable to other systems and radio technologies. The following description describes a new radio (New Radio, NR) system for example objectives, and NR terms are used in most of the description below, but these technologies are also applicable to applications other than NR system applications, such as a 6th generation (6th Generation, 6G) communication system.

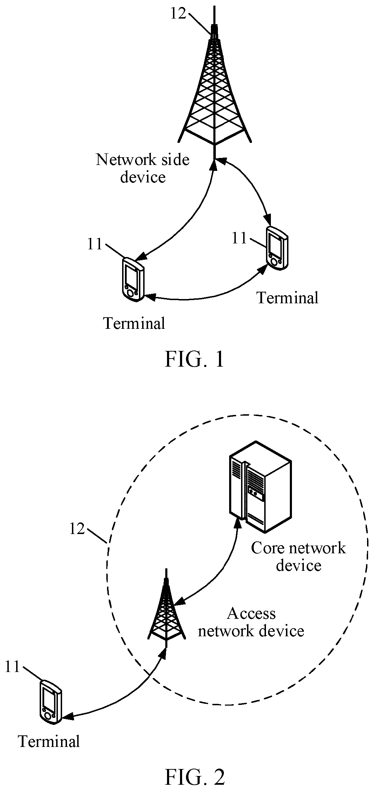

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) device/a virtual reality (virtual reality, VR) device, a robot, a wearable device (Wearable Device), a vehicle user equipment (VUE), a pedestrian user equipment (PUE), smart household (home devices having a wireless communication function, for example, a refrigerator, a television, a washing machine, or furniture), a game console, a personal computer (personal computer, PC), a teller machine, or a self-service machine. The wearable device includes: a smart watch, a smart wristband, smart headphones, smart glasses, smart jewelry (such as a smart bangle, a smart bracelet, a smart ring, a smart necklace, a smart anklet bangle, and a smart anklet), a smart wrist strap, smart clothes, and the like. It should be noted that, a specific type of the terminal 11 is not limited in the embodiments of this application. With reference to FIG. 1, as shown in FIG. 2, the network side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, or a Wi-Fi node, where the base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP) or some other suitable terms in the field. Provided that the same technical effect is achieved, the base station is not limited to a specific technical word. It should be noted that, only a base station in the NR system is used as an example for description, and a specific type of the base station is not limited in the embodiments of this application. The core network device may include, but is not limited to, at least one of the following: a core network node, a core network function, a mobility management entity (Mobility Management Entity, GSM), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDSP), a home subscriber server (Home Subscriber Server, HSS), a centralized network configuration (Centralized network configuration, CNC), a network repository function (Network Repository Function, NRF), a network exposure function (Network Exposure Function, NEF), a local NEF (L-NEF or L-NEF), a binding support function (Binding Support Function, BPF), an application function (Application Function, PF), and the like. It should be noted that, only a core network device in the NR system is used as an example for description, and a specific type of the core network device is not limited in the embodiments of this application.

First, some nouns or terms involved in the claims and specification of this application are explained and described below.

In terms of the 5th generation mobile communication technology (5th Generation Mobile Communication Technology, 5G), "NR" refers to "New Radio", and is usually translated into "New Radio". It may be understood that a 5G network may also be referred to as an "NR" network.

Compared with VoLTE in 4th generation mobile communication technology (4th Generation Mobile Communication Technology, 4G), VoNR in 5G has higher call quality and a more stable connection.

At the beginning of installation of the 5G network, there are two networking manners: non-standalone (Non-Stand Alone, NSA) and SA. An NSA backbone network is based on a 4G base station, and has low costs and is fast in installation, but advantages such as low latency cannot be achieved. An SA backbone network is based on a newly built 5G base station, has real technical advantages, and is considered as a complete 5G. The VoNR can be promoted and popularized on a premise that the SA is widely applied.

Until the end of 2021, China has accumulatively built and opened a total of 1.425 million 5G base stations, covering all urban areas of prefecture-level cities, and more than 98% of county urban areas and 80% of rural townships. China has built the largest SA network in the world. So far, it may be considered that a hardware basis for popularization of the VoNR has been initially established.

In a current network coverage situation, the VoNR and the EPS-FB exist for a long time, and the EPS-FB cannot be withdrawn from the network to only support the VoNR. Because terminals of some users do not support the VoNR at delivery, and still need to be used in an operator network. In this case, only the EPS-FB can be used. The other terminals support the VoNR at delivery, and the network supports both the VoNR and the EPS-FB or only the EPS-FB. A specific manner to be selected is determined by the network.

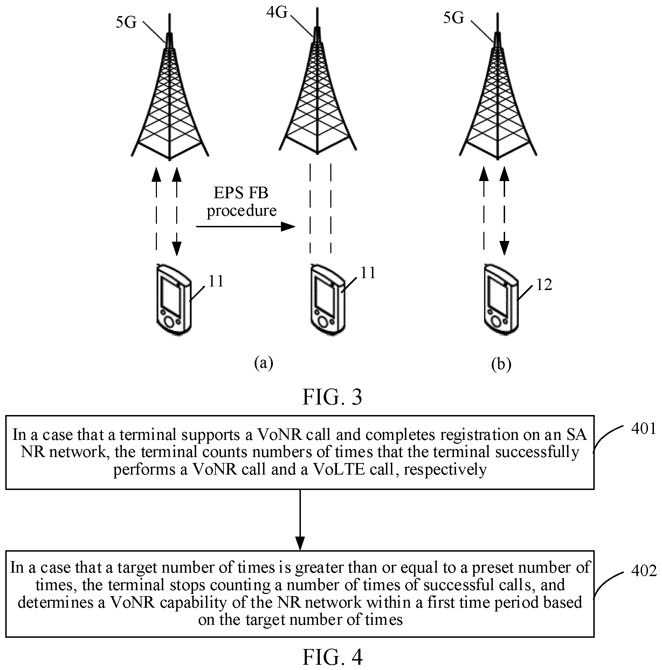

As shown in FIG. 3, (a) in FIG. 3 is a block diagram of a wireless communication system applied when the terminal 11 performs a VoLTE call (that is, has an EPS-FB procedure); and (b) in FIG. 3 is a block diagram of a wireless communication system applied when the terminal 11 performs a VoNR call.

A call capability monitoring method and apparatus, a terminal, and a readable storage medium provided in the embodiments of this application are described below through specific embodiments and application scenarios thereof with reference to the accompanying drawings.

At present, a network may determine, by using an AMF, whether the network supports VoNR and whether the network has an N26 interface, where the N26 interface is an interface (between an MME and the AMF) between a 4G core network and a 5G core network, and is used for interoperation between 4G and 5G. Although the terminal carries, in an uplink dedicated control channel (UL_DCCH) and/or UE capability information (UE Capability Information), information indicating that the UE supports a VoNR capability, the network carries only ims_Vops_3gpp=1 in registration accept (Registration accept) information, to indicate that the network supports an IMS Voice(3gpp) capability, and does not specifically indicate specific call capabilities that are in the VoNR capability and the EPS FB capability and that are supported by a network interface. Therefore, the terminal cannot learn whether the network supports the VoNR.

In many actual scenarios, according to network access requirements of operators (since October 1, 2021, all newly added terminals need to select to support the VoNR, and a VoNR switch is not allowed to be set on a user interface), the terminal may report a VoNR capability by default, and some networks temporarily do not support VoNR due to coverage reasons. However, some VoNR networks are abnormal, and operators temporarily close the VoNR after serious market complaints.

To facilitate the terminal to learn whether the network to which the terminal accesses supports the VoNR capability, an embodiment of this application provides a method for automatically determining, based on an accessed network behavior or a bearer type of a call successfully performed by the terminal, whether the network to which the terminal accesses supports the VoNR capability. It may be understood that, the terminal may learn a VoNR deployment situation of the network by using the collected network behavior and bearer type information of the call successfully performed by the terminal, and optimize some service scenarios based on whether the network supports VoNR. Alternatively, some experience optimization may be performed for the scenario after a network VoNR capability is obtained.

An embodiment of this application provides a call capability monitoring method. FIG. 4 is a possible schematic flowchart of a call capability monitoring method according to an embodiment of this application. As shown in FIG. 4, the call capability monitoring method provided in the embodiments of this application may include the following step 401 and step 402.

Step 401: In a case that a terminal supports a VoNR call and completes registration on an SA NR network, the terminal counts numbers of times that the terminal successfully performs the VoNR call and a VoLTE call, respectively.

Optionally, in the embodiments of this application, that "the terminal completes registration on the SA NR network" may specifically include: The terminal registers with the NR network, and successfully registers with an IMS of the NR network.

It may be understood that, after the terminal completes registration on the SA NR network, if the terminal supports the VoNR capability, step 401 may continue to be performed; or if the terminal does not support the VoNR capability, the terminal does not need to perform step 401. Alternatively, if the terminal completes registration on the NR network of an NSA, the terminal does not need to perform step 401 either. In this way, power consumption of the terminal can be reduced.

In the embodiments of this application, an objective of the terminal to count the numbers of times that the terminal successfully performs the VoNR call and the VoLTE call is to monitor the VoNR capability of the NR network, respectively.

It may be understood that, the foregoing VoNR capability of the NR network may represent the VoNR capability of a core network to which the terminal accesses. In other words, if the terminal determines that the foregoing NR network supports the VoNR capability, the terminal may consider that the core network of the NR network also supports the VoNR capability; or if the terminal determines that the foregoing NR network does not support the VoNR capability, the terminal may consider that the core network of the NR network does not support the VoNR capability either.

Optionally, in the embodiments of this application, after completing registration on the SA NR network, the terminal may monitor the VoNR capability of the NR network at intervals. In addition, before each VoNR capability counting procedure starts, the terminal first zeros out all the numbers of times of calls previously counted by the terminal.

For example, it is assumed that LTE_Call_Count and NR_Call_Count are respectively the numbers of times that the terminal successfully performs the VoLTE call and the VoNR call. Before starting to count the numbers of times that the terminal successfully performs the VoLTE call and the VoNR call, the terminal sets values of LTE_Call_Count and NR_Call_Count to 0.

Optionally, the "call" in the embodiments of this application includes: a calling call initiated by the terminal and a called call delivered by the NR network.

It should be noted that, unless otherwise specified, the "NR network" in the following embodiments all refer to the SA NR network. The two have the same meaning and can be exchanged.

Unless specifically described, in the following embodiments, the call capability monitoring method provided in the embodiments of this application is described by using an example in which "the terminal" is a terminal "supporting the VoNR capability" and "the NR network" is the "SA" NR network.

Optionally, in the embodiments of this application, in a process in which the terminal counts the numbers of times that the terminal successfully performs the VoNR call and the VoLTE call, respectively, if the terminal fails in performing a call, for example, the terminal fails in establishing a VoNR call, the terminal may update the number of times that the terminal successfully performs the VoNR call.

Step 402: In a case that a target number of times is greater than or equal to a preset number of times, the terminal stops counting a number of times of successful calls, and determines a VoNR capability of the NR network within a first time period based on the target number of times.

If the target number of times is a number of times of the terminal successfully performs the VoNR call, the NR network supports the VoNR capability within the first time period. Alternatively, if the target number of times is a number of times that the terminal successfully performs the VoLTE, the NR network does not support the VoNR capability within the first time period.

**In** the embodiments of this application, the preset number of times may be any possible number of times that is preset.

It may be understood that when the target number of times is greater than or equal to the preset number of times, it represents that the target number of times is sufficient to determine whether the NR network supports the VoNR capability.

In the embodiments of this application, that the terminal stops counting a number of times of successful calls may be understood as: The terminal stops counting the number of times that the terminal successfully performs the VoNR call and the number of times that the terminal successfully performs the VoLTE call.

In the embodiments of this application, when the terminal determines that the number of times that the terminal successfully performs the VoNR call or the number of times that the terminal successfully performs the VoLTE call is greater than or equal to the preset number of times, the terminal stops counting the numbers of times that the terminal performs the VoNR call and the VoLTE call. In this way, it can be ensured that only one of the numbers of times that the terminal successfully performs the VoNR call and the VoLTE call that are counted by the terminal can be greater than or equal to the preset number of times.

For example, it is assumed that the preset number of times is 4, and it is counted that LTE_Call_Count=2 and NR_Call_Count=3. In this case, after the terminal successfully performs another call, if the call is a VoNR call, the terminal determines that NR_Call_Count=4 (that is, the target number of times), so that the terminal may stop counting the numbers of times that the terminal successfully performs the VoNR call and the VoLTE call. In other words, the number of times that the terminal successfully performs the VoNR call is 4, and the number of times that the terminal successfully performs the VoLTE call is 3. Otherwise, the terminal determines that LTE_Call_Count=3.

Optionally, the preset number of times may be any possible number of times. For example, the preset number of times may be: 2, 3, 4, or the like, which can be determined according to an actual use requirement.

Optionally, duration of the numbers of times of the terminal successfully performs the VoLTE call and the VoLTE call may not be limited. That is, each procedure of monitoring the VoNR capability of the NR network starts from a number of times the terminal starts counting, and ends until the target number of times is greater than or equal to the preset number of times.

Certainly, during actual implementation, duration of the numbers of times of the terminal successfully performs the VoLTE call and the VoLTE call may also be limited. For example, counting duration may be set to 24 h, 28 h, 30 h, or the like. If the counting duration expires, the target number of times is not greater than or equal to the preset number of times, it is determined that monitoring of the VoNR capability of the NR network fails, and then the terminal may perform monitoring again.

Optionally, after the terminal determines that the target number of times is greater than or equal to the preset number of times, the terminal may zero out the number of times that the terminal successfully performs the VoNR call and the number of times that the terminal successfully performs the VoLTE call, so that the terminal may subsequently enter loop determining (a procedure of monitoring the VoNR capability of the NR network again) next time.

For example, after the terminal determines that the target number of times is greater than or equal to the preset number of times, the terminal may reset LTE_Call_Count or NR_Call_Count t to 0.

Optionally, in the embodiments of this application, the first time period may be a time period that lasts for a preset duration and that starts from a moment when the terminal determines that the target number of times is greater than or equal to the preset number of times. The preset duration may be any possible duration. For example, the preset duration may be 72 h, 48 h, or 24 h.

For example, it is assumed that the preset duration is 72 h, and the preset number of times is 3, if the terminal determines that the moment when the number of times that the terminal successfully performs the VoNR call (that is, the target number of times) is greater than or equal to the preset number of times is 8:00 a.m. on March 24, the terminal may immediately start a timer T1, and timing duration of the timer T1 is 72 h. It can be seen that, a start moment of the first time period is 8:00 a.m. on March 24, and an end moment of the first time period is 8:00 a.m. on March 27. Further, the terminal may stop counting the numbers of times that the terminal successfully performs the VoNR call and the VoLTE call at 8:00 a.m. on March 24.

Optionally, in the embodiments of this application, the foregoing step 401 may be specifically implemented by using the following step A.

Step A: In a case that the terminal supports the VoNR call and completes registration on the SA NR network, the terminal counts the numbers of times that the terminal successfully performs the VoNR call and the VoLTE call based on whether a call procedure of each successful call includes an EPS-FB procedure (a possible implementation), and/or based on a dedicated bearer type of each successful call (another possible implementation), respectively.

It should be noted that, "each successful call" in step A refers to each successful call performed by the terminal in a case that the terminal supports the VoNR call and completes registration on the SA NR network.

For example, the terminal starts, at a moment t1, the numbers of times that the terminal successfully performs the VoNR call and the VoLTE call, respectively, so that the terminal may count each successful call performed by the terminal after the t1 moment.

In the embodiments of this application, "a call procedure of a call" may be understood as: A signaling procedure between the terminal and the network (which may include the foregoing NR network) starting from initiation of the call to successful establishment of the call.

Optionally, the terminal may determine, based on a received quality of service (Quality of Service, QoS) identifier of each successful call, whether a dedicated bearer of the call is created based on the NR network or an LTE network, so as to determine whether the call is the VoNR call or the VoLTE call. The QoS identifier may be carried in a protocol data unit (Protocol Data Unit, PDU) session modification command corresponding to each successful call, and a value of each QoS identifier is a QoS level of a corresponding call.

For example, if a PDU modification command corresponding to a successful call includes: "5QI=1", it represents that the dedicated bearer of the call is created based on the NR network, where "5QI=1" is a QoS flow (flow) level created by a PDU of the NR network for a VoNR voice call; "5QI" is a QoS identifier, and "1" is a value of the QoS identifier.

For another example, if a PDU modification command corresponding to a successful call includes: "QCI=1", it represents that the dedicated bearer of the call is created based on the LTE network, where "QCI=1" is a QoS level created for the VoLTE voice call based on an LTE EPS bearer, "5QI" is a QoS identifier, and "1" is a value of the QoS identifier.

It may be understood that the foregoing example is illustrated by using an example in which the QoS level is 1. During actual implementation, the QoS level may alternatively be another level. For details, refer to the related art.

Call procedures in which the terminal establishes the VoNR call and the VoLTE call are described below by using examples, respectively.

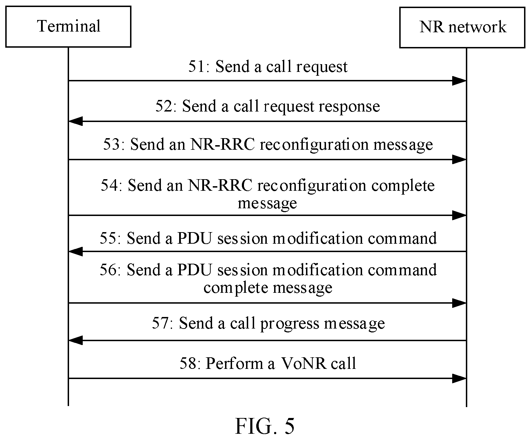

Example 1: FIG. 5 is a schematic flowchart of a VoNR calling procedure. As shown in FIG. 5, the VoNR calling procedure includes the following step 51 to step 58.

Step 51: A terminal sends a call request to an NR network.

Step 52: The NR network sends a call request response, for example, "100 trying", to the terminal, where the response is used for indicating that the NR network is processing a call request.

Step 53: The terminal sends an NR radio resource control (Radio Resource Control, RRC) reconfiguration message to the NR network, and starts an NR-RRC reconfiguration procedure, where the reconfiguration message is used for requesting to add a radio bearer (add radio bearer).

Step 54: The terminal sends an NR-RRC reconfiguration complete message to the NR network, to indicate that the terminal has completed the NR-RRC reconfiguration.

Step 55: The NR network sends a PDU session modification command, for example, "NR_RRC Reconfiguration(add Radio Bearer)", to the terminal, where the PDU session modification command is used for indicating the terminal to establish a dedicated bearer based on 5QI=1.

Step 56: The terminal sends a PDU session modification command complete message to the NR network, where the response message is used for indicating that the terminal has completed establishment of the dedicated bearer.

Step 57: The NR network sends a call progress message, for example, "183 Session Progress", to the terminal, where the call progress message is used for indicating a progress of establishing a call.

Step 58: The terminal performs a VoNR call, that is, "VoLTE NR Process".

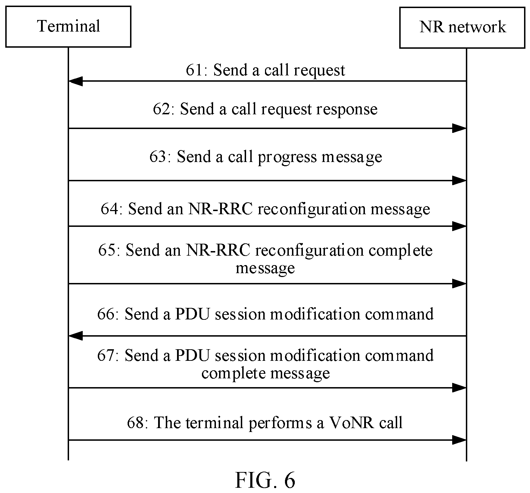

Example 2: FIG. 6 is a schematic flowchart of a VoNR called procedure. As shown in FIG. 6, the VoNR called procedure includes the following step 61 to step 68.

Step 61: An NR network sends a call request to a terminal.

Step 62: The terminal sends a call request response, for example, "100 trying", to the NR network, where the response is used for indicating that the terminal is processing a call request.

Step 63: The terminal sends a call progress message, for example, "183 Session Progress", to the NR network, where the call progress message is used for indicating a progress of establishing a call.

Step 64: The terminal sends an NR-RRC reconfiguration message to the NR network, and starts an NR-RRC reconfiguration procedure, where the reconfiguration message is used for requesting to add a radio bearer (add radio bearer).

Step 65: The terminal sends an NR-RRC reconfiguration complete message to the NR network, to indicate that the terminal has completed the NR-RRC reconfiguration.

Step 66: The NR network sends a PDU session modification command, for example, "NR_RRC Reconfiguration (add Radio Bearer)", to the terminal, where the PDU session modification command is used for indicating the terminal to establish a dedicated bearer based on 5QI=1.

Step 67: The terminal sends a PDU session modification command complete message to the NR network, where the response message is used for indicating that the terminal has completed establishment of the dedicated bearer.

Step 68: The terminal performs a VoNR call, that is, "VoLTE NR Process".

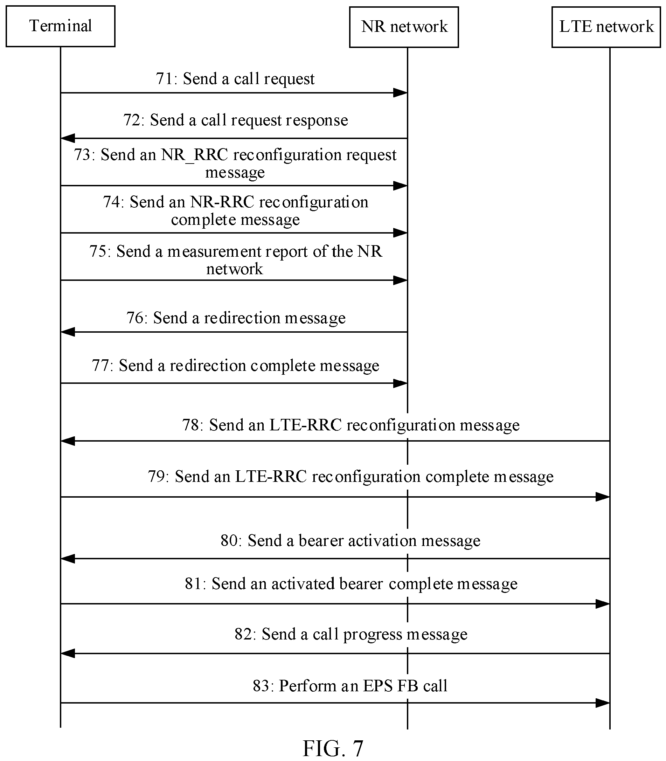

Example 3: FIG. 7 is a schematic flowchart of an EPS FB calling procedure. As shown in FIG. 7, the EPS FB calling procedure includes the following step 71 to step 83.

Step 71: A terminal sends a call request to an NR network.

Step 72: The NR network sends a call request response, for example, "100 trying", to the terminal, where the response is used for indicating that the NR network is processing a call request.

Step 73: The terminal sends an NR_RRC reconfiguration request message, for example, "NR_RRC Reconfiguration(Measurement Control info)", to the NR network, where the reconfiguration request message is used for requesting to reconfigure the NR-RRC.

Step 74: The terminal sends an NR-RRC reconfiguration complete message to the NR network, to indicate that the terminal has completed the NR-RRC reconfiguration.

Step 75: The terminal sends a measurement report of the NR network to the NR network.

Step 76: The NR network sends a redirection message, for example, "Hanover or Redirection", to the terminal, where the redirection message indicates that the terminal redirects a voice call.

Step 77: The terminal sends a redirection complete message to the NR network, to indicate that the NR network terminal has completed the voice call redirection.

Step 78: An LTE network sends an LTE-RRC reconfiguration message to the terminal, where the reconfiguration message is used for requesting to add a radio bearer, that is, "add a radio bearer".

Step 79: The terminal sends an LTE-RRC reconfiguration complete message to the LTE network, to indicate that the terminal has completed the LTE-RRC reconfiguration.

Step 80: The LTE network sends a bearer activation message, for example, "ESM_MSG_ACTIV ATE_DEDICATED _EPS_BEARER_CONTEXT_REQUEST(setup QCI=1 Bearer)", to the terminal, where the activation message is used for activating an activated and dedicated EPS bearer by the terminal, and is specifically used for establishing, by the terminal, a dedicated bearer with QCI=1.

Step 81: The terminal sends an activated bearer completion message to the LTE network, to notify the LTE network that the terminal has completed establishment of the dedicated bearer with QCI=1.

Step 82: The LTE network sends a call progress message, for example, "183 Session Progress", to the terminal, where the call progress message is used for indicating a progress of establishing a call.

Step 83: The terminal performs an EPS FB call.

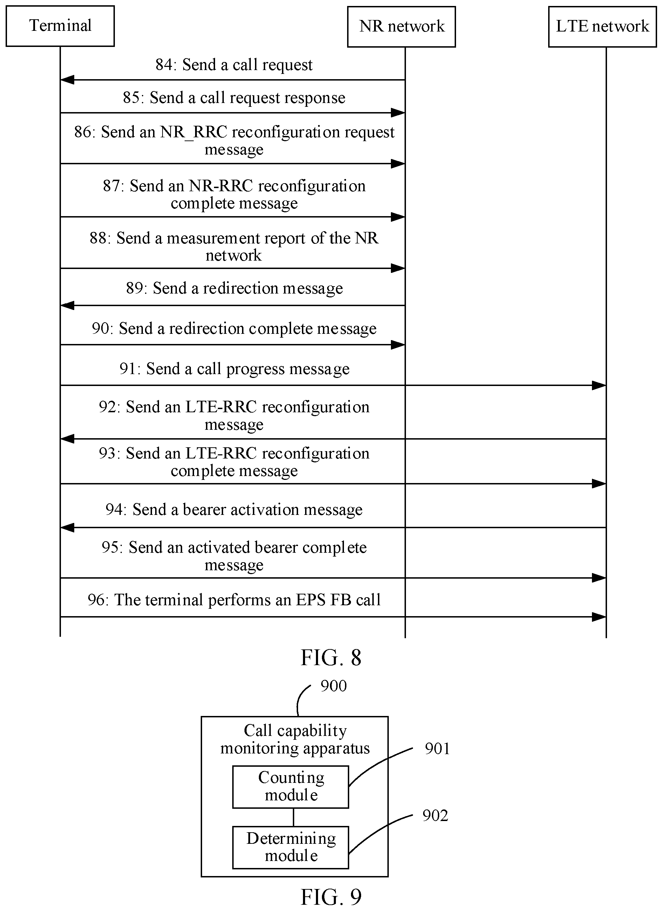

Example 4: FIG. 8 is a schematic flowchart of an EPS FB called procedure. As shown in FIG. 8, the EPS FB called procedure includes the following step 84 to step 94.

Step 84: An NR network sends a call request to a terminal.

Step 85: The terminal sends a call request response, for example, "100 trying", to the NR network, where the response is used for indicating that the terminal is processing a call request.

Step 86: The terminal sends an NR_RRC reconfiguration request message, for example, "NR_RRC Reconfiguration(Measurement Control info)", to the NR network, and the reconfiguration request message is used for requesting to reconfigure the NR-RRC.

Step 87: The terminal sends an NR-RRC reconfiguration complete message to the NR network, to indicate that the terminal has completed the NR-RRC reconfiguration.

Step 88: The terminal sends a measurement report of the NR network to the NR network.

Step 89: The NR network sends a redirection message, for example, "Hanover or Redirection", to the terminal, where the redirection message indicates that the terminal redirects a voice call.

Step 90: The terminal sends a redirection complete message to the NR network, to indicate that the NR network terminal has completed the voice call redirection.

Step 91: The terminal sends a call progress message, for example, "183 Session Progress", to the LTE network, where the call progress message is used for indicating a progress of establishing a call.

Step 92: An LTE network sends an LTE-RRC reconfiguration message to the terminal, where the reconfiguration message is used for requesting to add a radio bearer, that is, "add a radio bearer".

Step 93: The terminal sends an LTE-RRC reconfiguration complete message to the LTE network, to indicate that the terminal has completed the LTE-RRC reconfiguration.

Step 94: The LTE network sends a bearer activation message to the terminal, for example, "ESM_MSG_ACTIVATE_DEDICATED_EPS_BEARER_CONTEXT_REQUEST(setup QCI=1 Bearer)", where the activation message is used for activating an activated and dedicated EPS bearer by the terminal, and is specifically used for establishing, by the terminal, a dedicated bearer with QCI=1.

Step 95: The terminal sends an activated bearer completion message to the LTE network, to notify the LTE network that the terminal has completed establishment of the dedicated bearer with QCI=1.

Step 96: The terminal performs an EPS FB call.

Optionally, in the embodiments of this application, in the foregoing possible implementation, in a case that the terminal supports the VoNR call and completes registration on the SA NR network, the following step A1 and step A2, or step A1 and step A3 may be performed for each successful call performed by the terminal.

Step A1: A terminal determines whether a call procedure of an i-th successful call performed by the terminal includes an EPS-FB procedure.

In the embodiments of this application, for the foregoing i-th successful call, a terminal device may first determine whether the call procedure of the i-th successful call includes the EPS-FB procedure. If the call procedure of the i-th successful call does not include the EPS-FB procedure, the terminal may continue to perform the following step A2. If the call procedure of the i-th successful call includes the EPS-FB procedure, the terminal may continue to perform the following step A3.

It should be noted that, the i-th successful call is a successful call that is being detected and counted by the terminal.

Step A2: The terminal device determines a number of times that the terminal successfully performs a VoNR call to be M+1.

Step A3: The terminal device determines a number of times that the terminal successfully performs a VoLTE call to be N+1.

M is a number of times that the terminal successfully performs the VoNR call that is counted by the terminal last time, and M is an integer greater than 0. N is the number of times that the terminal successfully performs the VoLTE call that is counted by the terminal, and N is an integer greater than or equal to 0. M plus N equals i minus 1, where i is a positive integer. It can be seen that i is a total number of times of successful call of the terminal in a current call capability counting process.

It may be understood that M is a number of times that the terminal successfully performs the VoNR call that is counted by the terminal before the terminal counts the i-th successful call, and N is a number of times that the terminal successfully performs the VoLTE call that is counted by the terminal before the terminal counts the i-th successful call.

A specific process of a possible implementation is exemplarily described below.

Step a01: Start to enter a program.

Step a02: A terminal registers with an NR network, and successfully registers with an IMS.

Step a03: The terminal determines whether the terminal supports a VoNR capability, and only in a case that the terminal supports the VoNR capability, the terminal performs the following step a04; otherwise, the terminal ends.

Step a04: Set a parameter of a number of times that the terminal successfully performs a VoLTE call to LTE_Call_Count, and set a parameter of a number of times that the terminal successfully performs a VoNR call to NR_Call_Count, where the LTE_Call_Count and the NR_Call_Count are used to determine whether the NR network supports VoNR.

Before first counting starts, before first counting starts, parameters LTE_Call_Count and NR_Call_Count are both set to 0.

Calls counted by the terminal include a calling call (a call in which the terminal sends a call invitation (invite)) actively initiated by the terminal and a called call (a call in which the terminal receives the call invitation) delivered by a network.

Step a05: For each call performed by the terminal, check whether the NR network triggers an NR to LTE redirection or handover process (an EPS FB procedure) after the terminal sends a call invitation or receives a call invitation, that is, determine, based on this, whether the NR network supports a VoNR capability.

If both the terminal and the network support the VoNR capability, the NR network generally establishes a VoNR call without triggering an EPS FB procedure. Certainly, a temporary abnormality of the NR network may cause a failure in creating a VoNR call, and consequently, an EPS Fallback occurs. Therefore, whether a call established by a current radio access technology (radio access technology, RAT) is successful needs to be further confirmed.

Step a06: Add a value of LTE_Call_Count or NR_Call_Count by 1 only when the call of the current RAT is successfully established; otherwise, determining is performed again in a next call.

Step a07: After the value of LTE_Call_Count or NR_Call_Count is greater than or equal to a preset number of times K, it is considered that a current maximum number of times is sufficient to determine whether a network supports VoNR.

Step a08: If LTE_Call_Count is greater than or equal to K, indicating that each call of the NR network is an EPS fallback, it is determined that the NR network does not support VoNR. If NR_Call_Count is greater than K, it indicates that each call of the NR network is a VoNR call, and it is determined that the network supports VoNR.

In the embodiments of this application, in a case that the terminal supports the VoNR call and completes registration on the SA NR network, the EPS FB procedure is triggered only in a case that the NR network does not support the VoNR capability. Therefore, by counting whether the call procedure of each successful call of the terminal includes the EPS FB procedure, accuracy of the numbers of times that the terminal successfully performs the VoNR call and the VoLTE call can be improved, thereby improving accuracy of monitoring, by the terminal, the VoNR capability of the NR network.

Optionally, in the embodiments of this application, in the foregoing another possible implementation, in a case that the terminal supports the VoNR call and completes registration on the SA NR network, the terminal may perform the following step A4 and step A5, or step A4 and step A6 for each successful call performed by the terminal, to implement the foregoing step A.

Step A4: The terminal determines a dedicated bearer type of an i-th successful call.

In the embodiments of this application, for the foregoing i-th successful call, the terminal device may first determine the dedicated bearer type of the i-th successful call. If the dedicated bearer type of the i-th successful call is created based on the NR network, the terminal may continue to perform the following step A5, or if the dedicated bearer type of the i-th successful call is created based on the LTE network, the terminal may continue to perform the following step A6.

Step A5: The terminal device determines a number of times that the terminal successfully performs a VoNR call to be M+1.

Step A6: The terminal device determines a number of times that the terminal successfully performs a VoNR call to be N+1.

For descriptions of step A5 and step A6, refer to the related descriptions of step A2 and step A3 in the foregoing possible implementation.

A specific process of another possible implementation is exemplarily described below.

Step b01: Start to enter a program.

Step b02: A terminal registers with an NR network, and successfully registers with an IMS.

Step b03: The terminal determines whether the terminal supports a VoNR capability, and only in a case that the terminal supports the VoNR capability, the terminal performs the following step b04; otherwise, the terminal ends.

Step b04: Set a parameter of a number of times that the terminal successfully performs a VoLTE call to LTE_Call_Count, and set a parameter of a number of times that the terminal successfully performs a VoNR call to NR_Call_Count, where the LTE_Call_Count and the NR_Call_Count are used to determine whether the NR network supports VoNR.

Before first counting starts, parameters LTE_Call_Count and NR_Call_Count are both set to 0.

Calls counted by the terminal include a calling call (a call in which the terminal sends a call invitation (invite)) actively initiated by the terminal and a called call (a call in which the terminal receives the call invitation) delivered by a network.

Step b05: For each call performed by the terminal, whether the network supports the VoNR may be determined based on whether the terminal establishes a dedicated bearer by using an LTE (EPS Bearer) or by using an NR (PDU Session Control (session control)).

In normal situations, if both the terminal and the NR network support the VoNR, the NR network generally establishes a PDU session with 5 QI =1. Certainly, a temporary abnormality of the network may cause a failure in the VoNR Call, and consequently, an EPS Fallback occurs. Therefore, whether the call established by the current RAT is successful needs to be further confirmed.

Step b06: Add a value of LTE_Call_Count or NR_Call_Count by 1 only when the call of the current RAT is successfully established; otherwise, determining is performed again in a next call.

Step b07: After the value of LTE_Call_Count or NR_Call_Count is greater than or equal to a preset number of times K, it is considered that a current maximum number of times is sufficient to determine whether a network supports VoNR.

Step b08: If LTE_Call_Count is greater than or equal to K, indicating that each call of the NR network is an EPS fallback, it is determined that the NR network does not support VoNR. If NR_Call_Count is greater than K, it indicates that each call of the NR network is a VoNR call, and it is determined that the network supports VoNR.

In the embodiments of this application, in a case that the terminal supports the VoNR call and completes registration on the SA NR network, because only in a case that the NR network does not support the VoNR capability, the dedicated bearer for the call is established based on LET, and in a case that the NR network supports the VoNR capability, the terminal may directly establish a call bearer based on NR. Therefore, by counting a dedicated bearer type of each successful call performed by the terminal, the accuracy of the numbers of times that the terminal successfully performs the VoNR call and the VoLTE call can be improved, thereby improving the accuracy of monitoring the VoNR capability of the NR network by the terminal.

In the embodiments of this application, because the terminal may count the numbers of times that the terminal successfully performs the VoNR call and the VoLTE call based on whether the call procedure of each successful call includes the EPS FB procedure or the dedicated bearer type of each successful call, flexibility and accuracy of counting the number of times that the terminal successfully performs the call can be improved.

Optionally, in the embodiments of this application, the foregoing step 401 may be specifically implemented by using the following step B.

Step B: In a case that the terminal supports the VoNR call and completes registration on the SA NR network, after a second time period ends, the terminal re-counts the numbers of times that the terminal successfully performs the VoNR call and the VoLTE call, respectively.

The second time period is a time period of a preset duration after the terminal determines the VoNR capability of the NR network last time. It should be noted that, the "last time" herein refers to a last time after the terminal completes registration on the NR network.

For example, it is assumed that after the terminal registers with the NR network, and before step B is performed, the terminal has determined the VoNR capability of the NR network for three times, that is, determines, for the first time, that the NR network supports the VoNR capability in a time period 1, determines, for the second time, that the NR network supports the VoNR capability in a time period 2, and determines, for the third time, that the NR network does not support the VoNR capability in a time period 3. In this case, the time period 3 is the foregoing second time period.

In the embodiments of this application, since the terminal may recount the number of times that the terminal successfully performs the VoNR call and the VoLTE call after effective time that is greater than or equal to the VoNR capability of the NR network determined last time ends, and determine the VoNR capability of the NR network again based on the counted number of times, the terminal can continuously learn the VoNR capability of the NR network, and power consumption of the terminal can be reduced.

In the call capability monitoring method provided in the embodiments of this application, after completing registration on the NR network of the AS, the terminal supporting a VoNR may count the numbers of times that the terminal successfully performs the VoNR call and the voice over long-term evolution VoLTE call, and determine the VoNR capability of the terminal in a future time period (for example, the first time period) based on the number of times. Therefore, the terminal can accurately learn a VoNR capability of a network (that is, the NR network) to which the terminal accesses, so that the terminal can optimize experience in a scenario of a voice service based on the VoNR capability of the NR network to which the terminal accesses, thereby improving user experience.

Optionally, in the embodiments of this application, in the foregoing another possible implementation, before the foregoing step A, the call capability monitoring method provided in the embodiments of this application may further include the following step 403.

Step 403: The terminal determines a dedicated bearer type of each successful call based on a quality of service QoS identifier of each successful call.

The QoS identifier of a call indicates a dedicated bearer type of the call. For descriptions of the QoS identifier, refer to related descriptions of the QoS identifier in the foregoing embodiment.

**In** the embodiments of this application, because the QoS identifier of the call may indicate the dedicated bearer type of the call, a dedicated bearer type of each successful call may be accurately determined by using the QoS identifier of each successful call of the terminal, and an operation procedure of determining the dedicated bearer type of the call may be simplified, so that the numbers of times that the terminal successfully performs the VoNR call and the VoLTE call may be accurately determined.

Optionally, in the embodiments of this application, after the foregoing step 401, the call capability monitoring method provided in the embodiments of this application may further include the following step 404.

Step 404: The terminal updates target capability information to a target database.

The target capability information indicates a VoNR capability of the NR network within the first time period. The target capability information in the target database is used for a target device to query for the VoNR capability of the NR network within the first time period.

Optionally, in the embodiments of this application, the target device may include at least one of the following: a terminal and an upper-layer device (for example, the foregoing NR network) of the terminal.

Optionally, in the embodiments of this application, in the second time period, the terminal may directly read the VoNR capability of the NR network from a target database "NW_VoNRCap Cache". In this way, an operation of obtaining the VoNR capability of the NR network by the terminal can be improved.

**In** the embodiments of this application, after determining the VoNR capability of the NR network each time, the terminal may synchronously update the target capability information for indicating the NR network in the target database, so that the target device may query for the VoNR capability of the NR network within the first time period, thereby improving operation convenience of querying for the VoNR capability of the NR network.

It should be noted that, in the call capability monitoring method provided in the embodiments of this application, an execution entity may be a call capability monitoring apparatus, or a control module configured to execute the call capability monitoring method in the call capability monitoring apparatus. In the embodiments of this application, an example in which the call capability monitoring apparatus executes the call capability monitoring method is used to describe the call capability monitoring method provided in the embodiments of this application.

An embodiment of this application provides a call capability monitoring apparatus. FIG. 9 is a possible schematic structural diagram of a call capability monitoring apparatus 900 according to an embodiment of this application. As shown in FIG. 9, the call capability monitoring apparatus 900 may include: a counting module 901 and a determining module 902.

The counting module 901 is configured to count, in a case that the terminal supports a VoNR capability and completes registration on an SA NR network, numbers of times that the terminal successfully performs a VoNR call and a VoLTE call, respectively; and
the counting module is further configured to stop counting a number of times of successful calls in a case that a target number of times is greater than or equal to a preset number of times; and
the determining module is configured to determine, after the counting module stops counting the number of successful calls, the VoNR capability of the NR network within a first time period based on the target number of times, where
if the target number of times is a number of times that the terminal successfully performs the VoNR call, the NR network supports the VoNR capability within the first time period; or if the target number of times is a number of times that the terminal successfully performs the VoLTE, the NR network does not support the VoNR capability within the first time period.

In a possible implementation, in a case that the terminal supports the VoNR capability and completes registration on the SA NR network, the foregoing counting module 901 is specifically configured to count, based on whether a call procedure of each successful call includes an EPS-FB procedure, and/or based on a dedicated bearer type of each successful call, the numbers of times that the terminal successfully performs the VoNR call and the VoLTE call, respectively.

In a possible implementation, in a case that the terminal supports the VoNR capability and completes registration on the SA NR network, for each successful call, the foregoing counting module 901 is specifically configured to:
determine, if a call procedure of an i-th successful call does not include the EPS-FB procedure, the number of times that the terminal successfully performs the VoNR call to be M+1, where M is a number of times that the terminal successfully performs the VoNR call that is counted by the counting module 901 last time; or
if a call procedure of an i-th successful call includes the EPS-FB procedure, determine the number of times that the terminal successfully performs the VoLTE call to be N+1, where N is a number of times that the terminal successfully performs the VoLTE call that is counted by the counting module 901 last time, where
both M and N are integers greater than or equal to 0, M plus N equals i minus 1, and i is a positive integer.

In a possible implementation, in a case that the terminal supports the VoNR capability and completes registration on the SA NR network, the counting module 901 is specifically configured to determine, if a dedicated bearer of an i-th successful call is created based on the NR network, the number of times that the terminal successfully performs the VoNR call to be M+1, where M is a number of times that the terminal successfully performs the VoNR call that is counted by the counting module 901 last time; or
determine, if a dedicated bearer of an i-th successful call is created based on the LTE network, that the number of times that the terminal successfully performs the VoLTE call to be N+1, where N is a number of times that the terminal successfully performs the VoLTE call that is counted by the counting module 901 last time, where
both M and N are integers greater than or equal to 0, M plus N equals i minus 1, and i is a positive integer.

In a possible implementation, the determining module 902 is further configured to determine, before the counting module 901 counts respectively the numbers of times that the terminal successfully performs the VoNR call and the VoLTE call based on a dedicated bearer type of each successful call, the dedicated bearer type of each successful call based on a QoS level of each successful call.

In a possible implementation, in a case that the terminal supports the VoNR capability and completes registration on the SA NR network, the counting module 901 is specifically configured to re-count the numbers of times that the terminal successfully performs the VoNR call and the VoLTE call after the second time period ends, respectively.

The second time period is a time period of a preset duration after the counting module 901 determines the VoNR capability of the NR network last time.

In a possible implementation, the foregoing apparatus 900 further includes: an updating module. The updating module is configured to update target capability information to a target database after the determining module 902 determines the VoNR capability of the NR network within the first time period based on the target number of times, and the target capability information indicates the VoNR capability of the NR network within the first time period, where
the target capability information in the target database is used for a target device to query for the VoNR capability of the NR network within the first time period.

In the call capability monitoring apparatus 900 provided in the embodiments of this application, after the terminal supporting the VoNR completes registration on the NR network of the AS, the call capability monitoring apparatus 900 may count the number of times that the terminal successfully performs the VoNR call and the voice over long-term evolution VoLTE call in the future, and determine a VoNR capability of the terminal in a future time period (for example, a first time period) based on the number of times. Therefore, the terminal may accurately learn a VoNR capability of a network (that is, the NR network) to which the terminal accesses, so that the terminal may optimize experience in a scenario of a voice service based on the VoNR capability of the network to which the terminal accesses, thereby improving user experience.

The call capability monitoring apparatus in the embodiments of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a handheld computer, an in-vehicle electronic device, a wearable device, an ultra-mobile personal computer (ultra-mobile personal computer, UMPC), a netbook, or a personal digital assistant (personal digital assistant, PDA), and the non-mobile electronic device may be a server, a network attached storage (Network Attached Storage, NAS), a personal computer (personal computer, PC), a television (television, TV), a teller machine, or a self-service machine. This is not specifically limited in the embodiments of this application.

The call capability monitoring apparatus in the embodiments of this application may be an apparatus having an operating system. The operating system may be an Android (Android) operating system, may be an ios operating system, or may be another possible operating system. This is not specifically limited in the embodiments of this application.

The call capability monitoring apparatus provided in the embodiments of this application can implement all processes implemented by the method embodiments of FIG. 4. To avoid repetition, details are not described herein again.

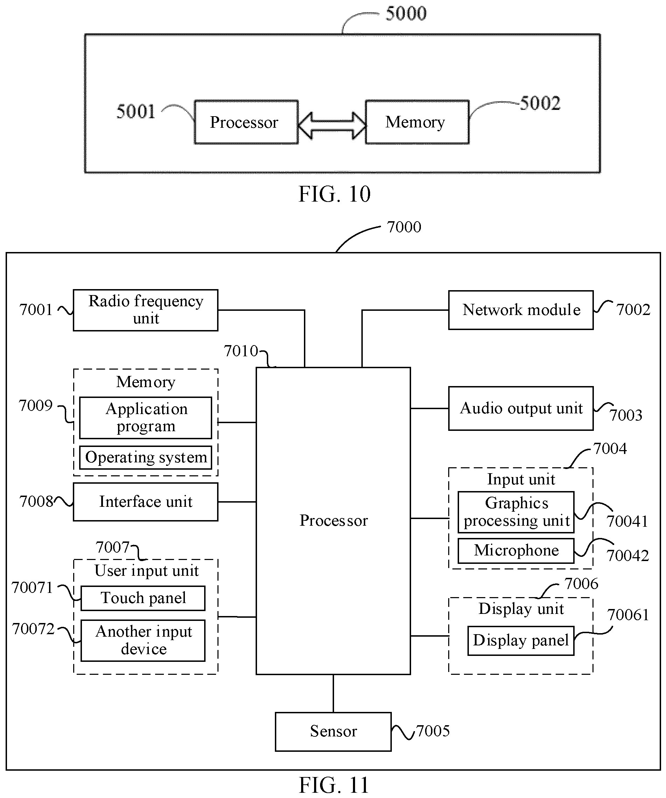

Optionally, as shown in FIG. 10, an embodiment of this application further provides a communication device 5000, including a processor 5001 and a memory 5002, where the memory 5002 includes a program or instructions stored therein and executable on the processor 5001. For example, when the communication device 5000 is a terminal, the program or instructions is executed by the processor 5001 to implement the steps of the foregoing method embodiments on the terminal, and the same technical effects can be achieved. To avoid repetition, details are not described herein again. Alternatively, when the communication device 5000 is a network side device, the program or instructions is executed by the processor 5001 to implement the steps of the foregoing method embodiments performed by a terminal, and the same technical effects can be achieved. To avoid repetition, details are not described herein again.

It should be noted that, the electronic device in the embodiments of this application includes the foregoing mobile electronic device and non-mobile electronic device.

FIG. 11 is a schematic diagram of a hardware structure of an electronic device for implementing the embodiments of this application.

The terminal 7000 includes, but is not limited to: at least some components such as a radio frequency unit 7001, a network module 7002, an audio output unit 7003, an input unit 7004, a sensor 7005, a display unit 7006, a user input unit 7007, an interface unit 7008, a memory 7009, and a processor 7010.

A person skilled in the art may understand that the terminal 7000 further includes a power supply (such as a battery) for supplying power to the components. The power supply may logically connect to the processor 7010 by using a power supply management system, thereby implementing functions, such as charging, discharging, and power consumption management, by using the power supply management system. A terminal structure shown in FIG. 11 does not constitute a limitation to the terminal, and the terminal may include more or fewer components than those shown in the figure, or some components may be combined, or a different component deployment may be used. Details are not described herein again.

It should be understood that, in the embodiments of this application, the input unit 7004 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 7006 may include a display panel 7061, for example, the display panel 7061 may be configured in a form such as a liquid crystal display or an organic light-emitting diode. The user input unit 7007 includes at least one of a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, and details are not described herein again.

In this embodiment of this application, the radio frequency unit 7001 receives downlink data from a network side device and then transmits the downlink data to the processor 7010 for processing. In addition, the radio frequency unit 7001 may send uplink data to the network side device. Generally, the radio frequency unit 7001 includes, but not limited to, an antenna, an amplifier, a transceiver, a coupler, a low noise amplifier, a duplexer, and the like.

The memory 7009 may be configured to store a software program or instructions and various data. The memory 7009 may mainly include a first storage region for storing a program or instructions and a second storage region for storing data. The first storage region may store an operating system, an application program or instructions required by at least one function (for example, a sound playback function and an image playback function), and the like. In addition, the memory 7009 may include a volatile memory or a non-volatile memory, or the memory 7009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDRSDRAM), an enhanced synchronous dynamic random access memory (enhanced SDRAM, ESDRAM), a synch link dynamic random access memory (synch link DRAM, SLDRAM), and a direct rambus random access memory (direct rambus RAM, DRRAM), and the like. The memory 7009 in the embodiments of this application includes, but not limited to, these memories and any other suitable types of memories.

The processor 7010 may include one or more processing units. Optionally, the processor 7010 integrates an application processor and a modem processor. The application processor mainly processes operations related to an operating system, a user interface, and an application program. The modem processor mainly processes a wireless communication signal, such as a baseband processor. It may be understood that the foregoing modem processor may not be integrated into the processor 7010.

It should be understood that, in the embodiments of this application, the input unit 7004 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 7006 may include a display panel 7061, for example, the display panel 7061 may be configured in a form such as a liquid crystal display or an organic light-emitting diode. The user input unit 7007 includes at least one of a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, and details are not described herein again.

The processor 1010 is configured to: count, in a case that the terminal supports the VoNR capability and completes registration on the SA NR network, the numbers of times that the terminal successfully performs the VoNR call and the VoLTE call, respectively; and stop counting a number of times of successful calls in a case that a target number of times is greater than or equal to the preset number of times, and determine the VoNR capability of the NR network within the first time period based on the target number of times.

If the target number of times is a number of times that the terminal successfully performs the VoNR call, the NR network supports the VoNR capability within the first time period; or if the target number of times is a number of times that the terminal successfully performs the VoLTE, the NR network does not support the VoNR capability within the first time period.

In the terminal provided in the embodiments of this application, after completing registration on the NR network of the AS, the terminal supporting the VoNR may count the number of times that the terminal successfully performs the VoNR call and the voice over long-term evolution VoLTE call, and determine a VoNR capability of the terminal in a future time period (for example, a first time period) based on the number of times. Therefore, the terminal may accurately learn the VoNR capability of a network (that is, the NR network) to which the terminal accesses.

In a possible implementation, in a case that the terminal supports the VoNR capability and completes registration on the SA NR network, the foregoing processor 1010 is specifically configured to count, based on whether a call procedure of each successful call includes an EPS-FB procedure, and/or based on a dedicated bearer type of each successful call, the numbers of times that the terminal successfully performs the VoNR call and the VoLTE call, respectively.

In a possible implementation, in a case that the terminal supports the VoNR capability and completes registration on the SA NR network, for each successful call, the foregoing processor 1010 is specifically configured to:
determine, if a call procedure of an i-th successful call does not include the EPS-FB procedure, the number of times that the terminal successfully performs the VoNR call to be M+1, where M is a number of times that the terminal successfully performs the VoNR call that is counted by the processor 1010 last time; or
determine, if a call procedure of an i-th successful call includes the EPS-FB procedure, the number of times that the terminal successfully performs the VoLTE call to be N+1, where N is a number of times that the terminal successfully performs the VoLTE call that is counted by the processor 1010 last time, where
both M and N are integers greater than or equal to 0, M plus N equals i minus 1, and i is a positive integer.

In a possible implementation, in a case that the terminal supports the VoNR capability and completes registration on the SA NR network, the foregoing processor 1010 is specifically configured to determine, if a dedicated bearer of an i-th successful call is created based on the NR network, the number of times that the terminal successfully performs the VoNR call to be M+1, where M is a number of times that the terminal successfully performs the VoNR call that is counted by the processor 1010 last time; or
determine, if a dedicated bearer of an i-th successful call is created based on the LTE network, the number of times that the terminal successfully performs the VoLTE call to be N+1, where N is a number of times that the terminal successfully performs the VoLTE call that is counted by the processor 1010 last time, where
both M and N are integers greater than or equal to 0, M plus N equals i minus 1, and i is a positive integer.

**In** a possible implementation, before the counting, based on a dedicated bearer type of each successful call, numbers of times that the terminal successfully performs a VoNR call and a VoLTE call, respectively, the foregoing processor 1010 is further configured to determine the dedicated bearer type of each successful call based on a QoS level of each successful call.

**In** a possible implementation, in a case that the terminal supports the VoNR capability and completes registration on the SA NR network, the foregoing processor 1010 is specifically configured to re-count the numbers of times that the terminal successfully performs the VoNR call and the VoLTE call after the second time period ends, respectively.

The second time period is a time period of a preset duration after the processor 1010 determines the VoNR capability of the NR network last time.

**In a** possible implementation, after the determining the VoNR capability of the NR network within the first time period based on the target number of times, the processor 1010 is configured to update target capability information to a target database, and the target capability information indicates the VoNR capability of the NR network within the first time period, where
the target capability information in the target database is used for a target device to query for the VoNR capability of the NR network within the first time period.

**In** the call capability monitoring apparatus provided in the embodiments of this application, after the terminal supporting the VoNR completes registration on the NR network of the AS, the call capability monitoring apparatus may count the numbers of times that the terminal successfully performs the VoNR call and the voice over long-term evolution VoLTE call in the future, and determine a VoNR capability of the terminal in a future time period (for example, a first time period) based on the number of times. Therefore, the terminal may accurately learn a VoNR capability of a network (that is, the NR network) to which the terminal accesses, so that the terminal may optimize experience in a scenario of a voice service based on the VoNR capability of the network to which the terminal accesses, thereby improving user experience.

An embodiment of this application further provides a readable storage medium, storing a program or instructions. The program or instructions, when executed by a processor, implements all processes of the foregoing call capability monitoring embodiments, and can achieve the same technical effects. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a chip, including a processor and a communication interface, where the communication interface is coupled to the processor, and the processor is configured to run a program or instructions, to implement all processes of the foregoing call capability monitoring method embodiments, and can achieve the same technical effects. To avoid repetition, details are not described herein again.

It should be understood that, the chip mentioned in the embodiments of this application may also be referred to as a system-level chip, a system chip, a chip system, a system on chip, or the like.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that, the scope of the method and apparatus in the embodiments of this application is not limited to performing functions in the order shown or discussed, and it may further include performing the functions in a substantially simultaneous manner or in reverse order according to the functions involved. For example, the described method may be performed in a different order than described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or a part that contributes to the conventional technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

## Claims

1. A call capability monitoring method, comprising:
in a case that a terminal supports a voice over new radio VoNR capability and completes registration on a standalone SA NR network, counting, by the terminal, numbers of times that the terminal successfully performs a VoNR call and a voice over long-term evolution VoLTE call, respectively;
in a case that a target number of times is greater than or equal to a preset number of times, stopping, by the terminal, counting a number of times of successful calls, and determining a VoNR capability of the NR network within a first time period based on the target number of times, wherein
if the target number of times is a number of times that the terminal successfully performs the VoNR call, the NR network supports the VoNR capability within the first time period; or
if the target number of times is a number of times that the terminal successfully performs the VoLTE, the NR network does not support the VoNR capability within the first time period.

2. The method according to claim 1, wherein the counting, by the terminal, the numbers of times that the terminal successfully performs the VoNR call and the VoLTE call, respectively comprises:
counting, by the terminal based on whether a call procedure of each successful call comprises an evolved packet system-fallback EPS-FB procedure, and/or based on a dedicated bearer type of each successful call, the numbers of times that the terminal successfully performs the VoNR call and the VoLTE call, respectively.

3. The method according to claim 2, wherein the counting, by the terminal based on whether the call procedure of each successful call comprises the EPS-FB procedure, the numbers of times that the terminal successfully performs the VoNR call and the VoLTE call, respectively comprises:
if a call procedure of an i-th successful call does not comprise the EPS-FB procedure, counting, by the terminal device, the number of times that the terminal successfully performs the VoNR call as M+1, wherein M is a number of times that the terminal successfully performs the VoNR call that is counted by the terminal last time; or
if a call procedure of an i-th successful call comprises the EPS-FB procedure, counting, by the terminal device, the number of times that the terminal successfully performs the VoLTE call as N+1, wherein N is a number of times that the terminal successfully performs the VoLTE call that is counted by the terminal last time, wherein
both M and N are integers greater than or equal to 0, M plus N equals i minus 1, and i is a positive integer.

4. The method according to claim 2, wherein the counting, by the terminal based on the dedicated bearer type of each successful call, the numbers of times that the terminal successfully performs the VoNR call and the VoLTE call, respectively comprises:
if a dedicated bearer of an i-th successful call is created based on the NR network, counting, by the terminal, the number of times that the terminal successfully performs the VoNR call as M+1, wherein M is a number of times that the terminal successfully performs the VoNR call that is counted by the terminal last time; or
if a dedicated bearer of an i-th successful call is created based on an LTE network, counting, by the terminal, the number of times that the terminal successfully performs the VoLTE call as N+1, wherein N is a number of times that the terminal successfully performs the VoLTE call that is counted by the terminal last time, wherein
both M and N are integers greater than or equal to 0, M plus N equals i minus 1, and i is a positive integer.

5. The method according to claim 2 or 4, wherein before the counting, by the terminal based on the dedicated bearer type of each successful call, the numbers of times that the terminal successfully performs the VoNR call and the VoLTE call, respectively, the method further comprises:
determining, by the terminal, the dedicated bearer type of each successful call based on a quality of service QoS identifier of the successful call.

6. The method according to any one of claims 1 to 4, wherein the counting, by the terminal, the numbers of times that the terminal successfully performs the VoNR call and the VoLTE call, respectively comprises:
re-counting, by the terminal after a second time period ends, the numbers of times that the terminal successfully performs the VoNR call and the VoLTE call, respectively, wherein
the second time period is a time period of a preset duration after the terminal determines the VoNR capability of the NR network last time.

7. The method according to any one of claims 1 to 4, wherein after the determining the VoNR capability of the NR network within the first time period based on the target number of times, the method further comprises:
updating, by the terminal, target capability information to a target database, wherein the target capability information indicates the VoNR capability of the NR network within the first time period, wherein
the target capability information in the target database is used for a target device to query for the VoNR capability of the NR network within the first time period.

8. A call capability monitoring apparatus, comprising: a counting module and a determining module, wherein
the counting module is configured to count, in a case that a terminal supports a VoNR capability and completes registration on a standalone SA NR network, numbers of times that the terminal successfully performs a VoNR call and a VoLTE call, respectively;
the counting module is further configured to stop counting a number of times of successful calls in a case that a target number of times is greater than or equal to a preset number of times; and
the determining module is configured to determine, after the counting module stops counting the number of times of successful calls, the VoNR capability of the NR network within the first time period based on the target number of times, wherein
if the target number of times is a number of times that the terminal successfully performs the VoNR call, the NR network supports the VoNR capability within the first time period; or
if the target number of times is a number of times that the terminal successfully performs the VoLTE, the NR network does not support the VoNR capability within the first time period.

9. The apparatus according to claim 8, wherein in a case that the terminal supports the VoNR capability and completes registration on the SA NR network, the counting module is specifically configured to count, based on whether a call procedure of each successful call comprises an EPS-FB procedure, and/or based on a dedicated bearer type of each successful call, the numbers of times that the terminal successfully performs the VoNR call and the VoLTE call, respectively.

10. The apparatus according to claim 9, wherein in a case that the terminal supports the VoNR capability and completes registration on the SA NR network, the counting module is specifically configured to: determine, if a call procedure of an i-th successful call does not comprise the EPS-FB procedure, the number of times that the terminal successfully performs the VoNR call to be M+1, wherein M is a number of times that the terminal successfully performs the VoNR call that is counted by the counting module last time; or
determine, if a call procedure of an i-th successful call comprises the EPS-FB procedure, the number of times that the terminal successfully performs the VoLTE call to be N+1, wherein N is a number of times that the terminal successfully performs the VoLTE call that is counted by the counting module last time, wherein
both M and N are integers greater than or equal to 0, M plus N equals i minus 1=i-1, and i is a positive integer.

11. The apparatus according to claim 9, wherein in a case that the terminal supports the VoNR capability and completes registration on the SA NR network, for each successful call, the counting module is specifically configured to:
determine, if a dedicated bearer of an i-th successful call is created based on the NR network, the number of times that the terminal successfully performs the VoNR call to be M+1, wherein M is a number of times that the terminal successfully performs the VoNR call that is counted by the counting module last time; or
determine, if a dedicated bearer of an i-th successful call is created based on an LTE network, the number of times that the terminal successfully performs the VoLTE call to be N+1, wherein N is a number of times that the terminal successfully performs the VoLTE call that is counted by the counting module last time, wherein
both M and N are integers greater than or equal to 0, M plus N equals i minus 1, and i is a positive integer.

12. The apparatus according to claim 9 or 11, wherein the determining module is further configured to determine the dedicated bearer type of each successful call based on an QoS identifier of each successful call before the counting module counts respectively, based on the dedicated bearer type of each successful call, the numbers of times that the terminal successfully performs the VoNR call and the VoLTE call.

13. The apparatus according to any one of claims 8 to 11, wherein in a case that the terminal supports the VoNR capability and completes registration on the SA NR network, the counting module is specifically configured to re-count the numbers of times that the terminal successfully performs the VoNR call and the VoLTE call after a second time period ends, respectively, wherein
the second time period is a time period of a preset duration after the counting module determines the VoNR capability of the NR network last time.

14. The apparatus according to any one of claims 8 to 11, wherein the apparatus further comprises: an updating module, wherein
the updating module is configured to update target capability information to a target database after the determining module determines the VoNR capability of the NR network within the first time period based on the target number of times, and the target capability information indicates the VoNR capability of the NR network within the first time period, wherein
the target capability information in the target database is used for a target device to query for the VoNR capability of the NR network within the first time period.

15. A terminal, comprising a processor, a memory, and a program or instructions stored in the memory and executable on the processor, wherein when the program or the instructions are executed by the processor, steps of the call capability monitoring method according to any one of claims 1 to 7 are implemented.

16. A readable storage medium, storing a program or instructions, wherein when the program or the instructions are executed by a processor, steps of the call capability monitoring method according to any one of claims 1 to 7 are implemented.

17. A computer software product, when executed by at least one processor, implementing the call capability monitoring method according to any one of claims 1 to 7.

18. A chip, wherein the chip comprises a processor and a communication interface, the communication interface is coupled to the processor, and the processor is configured to execute a program or instructions to implement the call capability monitoring method according to any one of claims 1 to 7.
